Europäisches Patentamt

European Patent Office

Office européen des brevets

(19)

(11) Veröffentlichungsnummer: **0 198 364**
**B1**

(12) **EUROPÄISCHE PATENTSCHRIFT**

(45) Veröffentlichungstag der Patentschrift: **02.01.91**

(51) Int. Cl.⁵: **B 29 C 45/50, B 29 C 45/17**

(21) Anmeldenummer: **86104639.9**

(22) Anmeldetag: **04.04.86**

(54) **Kunststoff-Spritzgiesseinheit.**

(30) Priorität: **15.04.85 DE 3513411**
**26.07.85 DE 3526710**

(43) Veröffentlichungstag der Anmeldung:
**22.10.86 Patentblatt 86/43**

(45) Bekanntmachung des Hinweises auf die
Patenterteilung:
**02.01.91 Patentblatt 91/01**

(84) Benannte Vertragsstaaten:
**AT CH DE FR GB IT LI NL**

(56) Entgegenhaltungen:
**DE-A-3 229 223**
**GB-A- 946 194**

(73) Patentinhaber: **Hehl, Karl**
**Arthur-Hehl-Strasse 32**
**D-7298 Lossburg 1 (DE)**

(72) Erfinder: **Hehl, Karl**
**Arthur-Hehl-Strasse 32**
**D-7298 Lossburg 1 (DE)**

(74) Vertreter: **Mayer, Friedrich, Dr.**
**Patentanwälte Dr. F. Mayer Dipl.-Phys. G. Frank**
**Westliche 24**
**D-7530 Pforzheim (DE)**

Courier Press, Leamington Spa, England.

**Beschreibung**

Die Erfindung bezieht sich auf eine Kunststoff-Spritzgießeinheit entsprechend dem Oberbegriff des Patentanspruches 1.

Bei einer bekannten Kunststoff-Spritzgießeinheit dieser Art (DE—A—32 29 223) bilden der Plastifizierzylinder und der mit einem Rieselschacht sowie einer Zufuhreinrichtung für das Kunststoffmaterial versehene Trägerblock eine bauliche Einheit. Unter der Voraussetzung der Abnahme der genannten Zufuhreinrichtung für das Kunststoffmaterial ist diese bauliche Einheit als ganzes zur Auswechslung bestimmt und geeignet. In Arbeitsposition ist die Einheit mit Hilfe der Kupplungseinrichtung mit dem restlichen Aggregat der Spritzgießeinheit verbunden. Die diese Verbindung herstellenden, diametral angeordneten Schieber der Kupplungseinrichtung sind im Gehäuse des restlichen Aggregates der Spritzgießeinheit radial verschiebbar gelagert und hintergreifen mit Schrägflächen korrespondierende Schrägflächen an einem radialen Endflansch des Trägerblockes. Eine Auswechslung des Plastifizierzylinders ist demzufolge nur dadurch möglich, daß die ganze, aus Plastifizierzylinder und Trägerblock bestehende bauliche Einheit vom restlichen Aggregat der Spritzgießeinheit abgekuppelt und abtransportiert wird. Dabei werden die Schieber der Kupplungseinrichtung in ihre rückwärtige Entriegelungsposition gesteuert, wenn die bauliche Einheit an dem den Abtransport bewerkstelligenden Hebezeug befestigt ist.

Da ein synchroner Angriff der mit getrennten hydraulischen Einrichtungen angetriebenen, als Keile wirkenden Schieber naturgemäß nicht möglich ist, wirken sie beim Kupplungsvorgang dezentrierend auf die genannte bauliche Einheit. Andererseits erfordern neue Spritzgießtechniken zunehmend auch längere Plastifizierzylinder, bei welchen sich geringe Zentrierfehler in erhebliche Positionierungsfehler an der Düse auswirken.

Der Erfindung liegt die Aufgabe zugrunde, eine Kunststoff-Spritzgießeinheit der eingangs genannten Gattung derart weiterzubilden, daß die durch Fertigungstoleranzen oder durch den Angriff der Schieber der Kupplungseinrichtung bedingten Asymmetrien des Plastifizierzylinders zur Spritzachse bei tragbarem technischen Aufwand vermieden sind, ohne daß der Abtransport des Plastifizierzylinders beeinträchtigt wäre.

Die Aufgabe wird durch die im Kennzeichen des Patentanspruches 1 genannten Merkmale gelöst.

Bei einer solchen Ausbildung ist der in der zentralen Bohrung des Trägerblockes axial verschieblich gelagerte Plastifizierzylinder in Arbeitsposition ausschließlich durch den Eingriff der Schieber der Kupplungseinrichtung axial festgelegt. Daraus ergibt sich der Vorteil, daß der von der Spritzgießeinheit abgekuppelte Plastifizierzylinder frei von seinem Trägerblock und somit auch frei von Bauteilen ist, die mit der Plastifizierung des Kunststoffmaterials bzw. dessen Zufuhr selber nichts zu tun haben. Durch den 'Befreiungshub' liegen die Voraussetzungen dafür vor, daß der Trägerblock von vornherein fest in die Spritzgießeinheit integriert werden kann. Durch die Befreiung des auszuwechselnden Plastifizierzylinders von unnötigem Ballast ist er beim Transport und bei der Lagerung im Depot wesentlich leichter zu handhaben.

Der erforderliche technische Aufwand für den 'Befreiungshub' ist dann besonders gering, wenn hierfür gemäß Anspruch 5 die gleichen Fahrzylinder Verwendung finden, die das Auf- und Absetzen der ganzen Spritzgießeinheit auf die Spritzgießform bewerkstelligen. In diesem Falle braucht der verlängert axiale Hub lediglich in entsprechende, allerdings in der Regel zeitlich getrennte, Abschnitte aufgeteilt zu werden. Der erste Hubabschnitt dient der thermischen Trennung des Plastifizierzylinders von der Spritzgießform durch Absetzen der ganzen Spritzgießeinheit von dieser Spritzgießform.

Der zweite Abschnitt des verlängerten Hubes der Fahrzylinder dient dem Befreiungshub, nachdem die Schieber in ihre rückwärtige Entriegelungsposition gesteuert sind und nachdem der Plastifizierzylinder axial arretiert ist. Insofern ist der technische Aufwand für einen serienmäßigen Einbau der für einen computergesteuerten Wechsel des Plastifizierzylinders erforderlichen zusätzlichen Einrichtungen durchaus tragbar, zu welchen auch ein stationäres Lager gehört, welches den Plastifizierzylinder nach dem Befreiungshub bis zum Abtransport abstützt und beim Abtransport nach oben freigibt. Bei einer Ausbildung gemäß Anspruch 10 ergibt sich eine axiale Festkeilung des Plastifizierzylinders im Trägerblock, die nach Anspruch 11 verstärkt ist. Dabei ermöglichen periodische axiale Belastungen der Plastifizierzylinders durch die Einspritzhübe der Förderschnecke entsprechende axiale Nachrückbewegungen des Plastifizierzylinders und radiale Nachrückbewegungen der Arretierschieber. Letztere führen zur axialen Festkeilung. Gemäß Anspruch 14 gewährleistet ein radialer Bolzen eine Drehsicherung zwischen Trägerblock Führungsstück und Plastifizierzylinder. Die Arretierschieber liegen dabei in einer symmetrischen Position am Bolzen an, wenn der Plastifizierzylinder aus dem Trägerblock herausgenommen ist.

Nach Anspruch 15 können alle Kupplungseinrichtungen mit Hilfe einer einzigen Kolben-Zylinder-Einheit über ein einziges Ausstoßerelement betätigt werden.

In der Zeichnung zeigen:
Fig. 1 Die Kunststoff-Spritzgießeinheit in Seitenansicht,
Fig. 2 einen Schnitt nach Linie II—II von Fig. 1,
Fig. 2A einen Schnitt nach Linie IIA—IIA von Fig. 7,
Fig. 3 einen Ausschnitt von Fig. 1 bei auf die Spritzgießform aufgesetzter Spritzgießeinheit in verkleinerter Darstellung,
Fig. 4 Anordnung gemäß Fig. 3 nach Absetzung der Spritzgießeinheit von der Spritzgießform (axiale Arretierstellung),
Fig. 5 die Anordnung gemäß der Fig. 3 oder 4 nach vollzogenem Befreiungshub für den Plastifizierzylinder,

Fig. 6 einen Schnitt nach Linie VI—VI von Fig. 5 in vergrößerter Darstellung,

Fig. 7 einen Schnitt nach Linie VII—VII von Fig. 5 in vergrößerter Darstellung,

Fig. 8 den düsenseitigen Endabschnitt der Plastifizierzylinder-Einheit teilweise im Längsschnitt in stark vergrößerter Darstellung,

Fign. 9, 10, 11 den Plastifizierzylinder der Spritzgießeinheit in Rückansicht, Seitenansicht und Draufsicht,

Fig. 12 einen Ausschnitt aus der teilweise längsgeschnittenen Spritzgießeinheit in Seitenansicht und vergrößerter Darstellung,

Fig. 13 einen Schnitt nach Linie XIII—XIII von Fig. 12 bei in Kupplungsposition befindlichen Schiebern der Kupplungseinrichtung,

Fig. 14 die Anordnung gemäß Fig. 13 bei außer Kupplungsposition befindlichen Schiebern,

Fig. 15 das perspektivisch dargestellte Führungsstück der Spritzgießeinheit in vergrößerter Darstellung.

In einem weiteren Ausführungsbeispiel, gemäß welchem der Plastifizierzylinder mittels Arretierschieber axial festlegbar ist.

Fig. 16 einen Ausschnitt aus der längsgeschnittenen Spritzgießeinheit in einer Darstellung gemäß Fig. 12,

Fig. 17 einen Ausschnitt aus der längsgeschnittenen Spritzgießeinheit im Bereich von Trägerblock und Führungsstück in vergrößerter Darstellung,

Fig. 18 einen Schnitt nach Linie XVIII—XVIII von Fig. 17,

Fig. 19 einen Schieber der Kupplungseinrichtung in perspektivischer Darstellung,

Fig. 20 einen Arretierschieber der Kupplungseinrichtung in perspektivischer Darstellung,

Fig. 21 das zum Schieber und Arretierschieber gemäß Fig. 19 und 20 gehörige, perspektivisch dargestellt Spreizelement,

Fig. 22 das perspektivisch dargestellte Führungsstück der Spritzgießeinheit,

Fig. 23 einen Ausschnitt aus Fig. 17 in vergrößerter Darstellung und

Fig. 24—30 eine Variante des Ausführungsbeispieles gemäß den Fign. 16—23 in Darstellungen entsprechend den Figuren 23, 17—22.

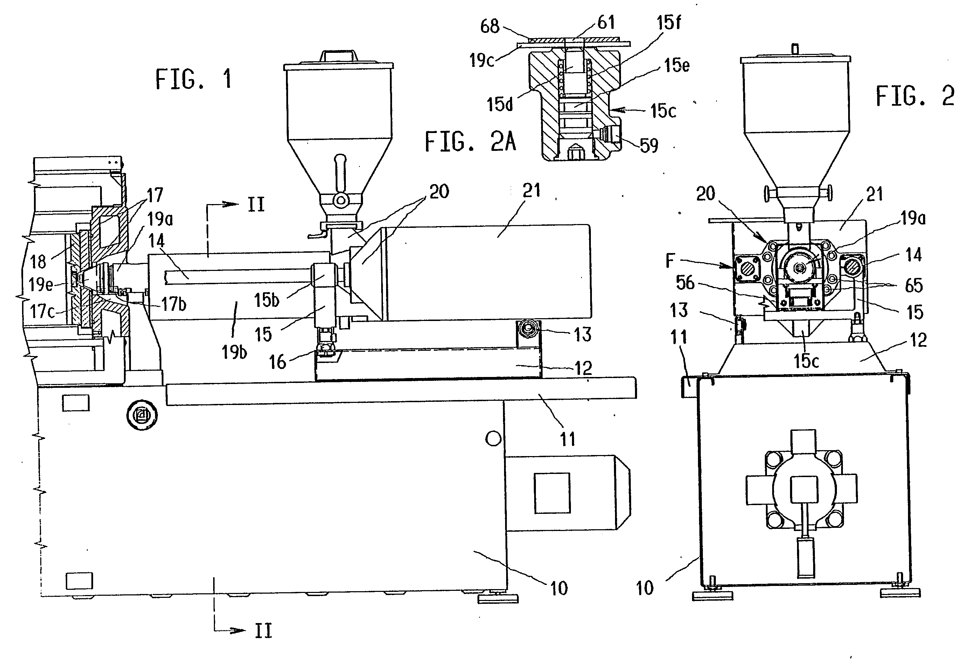

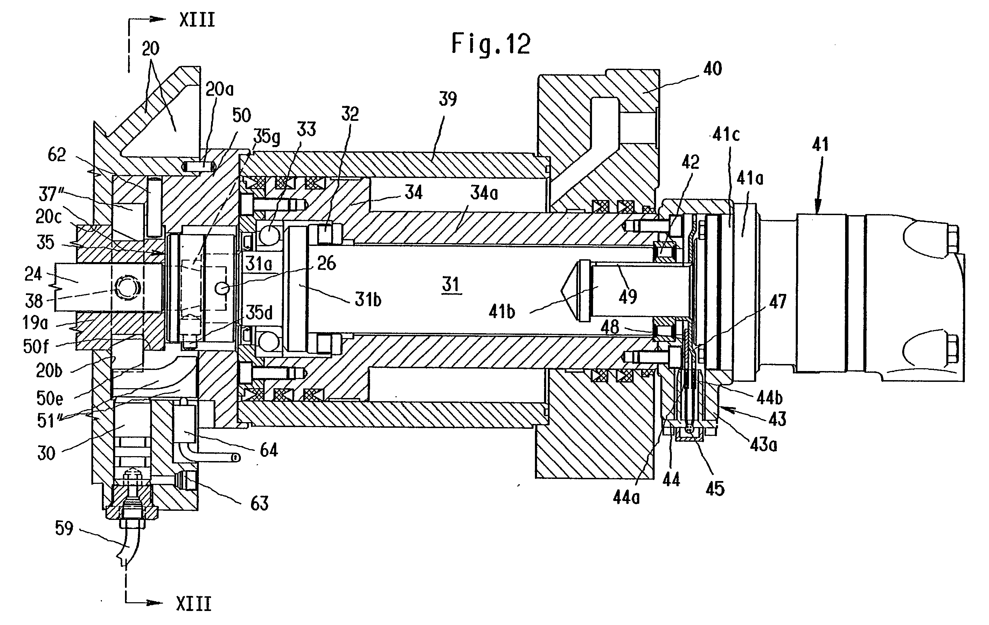

Auf dem quaderförmigen Maschinenfuß 10 mit Tankabdeckung 11 sind die Spritzießeinheit und eine Formschließeinheit derart einander zugeordnet, daß der Plastifizierzylinder 19a axial auf die in der Formschließeinheit aufgenommen Spritzgießform aufgesetzt bzw. abgesetzt werden kann. Hierzu dienen zwei Fahrzylinder F (Fig. 2, 13, 14). Ein hydraulischer Einspritzzylinder 34, 39 (Fig. 12) ermöglicht den Einspritzhub der im Plastifizierzylinder 19a axial verschiebbaren und mit einem Rotationsantrieb 41 versehenen Förderschnecke 24.

Die Spritzgießeinheit ist über Trägerblöcke 20, 40 auf den Säulen 14 axial verschieblich gelagert. Diese Säulen sind stirnseitig an der stationären Aufspannplatte 17 befestigt.

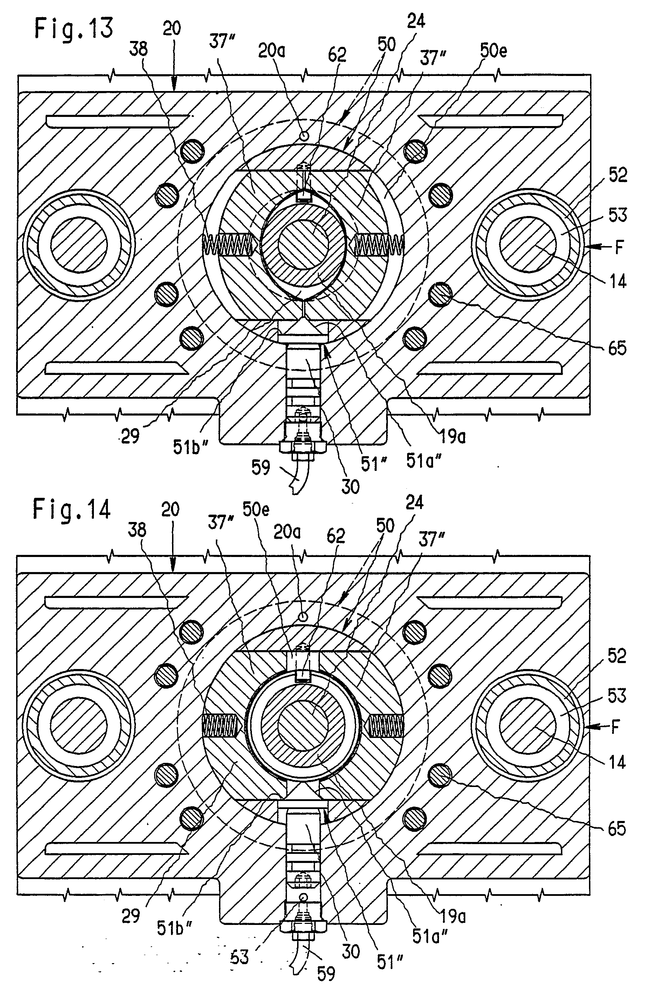

Die Kolben 53 (Fig. 13, 14) der Fahrzylinder F sitzen je auf einer Säule 14 fest auf. Die Zylinder 52 dieser Fahrzylinder F und der Zylinder 39 des hydaulischen Einspritzzylinders 34, 39 bilden zusammen mit den Trägerblöcken 20, 40 eine starre baulich Einheit, wobei der Zylinder 52 in den Trägerblöcken 20, 40 zentriert ist. Insoweit entsprechen Aufbau und Anordnung der hydraulischen Antriebssysteme der Spritzgießeinheit dem Aufbau und der Anordnung der Antriebssysteme in der Patentanmeldung P 34 47 597.4.

Bei rückseitiger bzw. vorderseitiger Beaufschlagung der Kolben 53 wird die Spritzgießeinheit von der Spritzgießform abgesetzt bzw. auf diese aufgesetzt. Der Kolben 34 des hydraulischen Einspritzzylinders 34, 39 und dessen Kolbenstange 34a sind von einer Spindel 31 durchsetzt, welche vorne in einen Kupplungsabschnitt 31a ausläuft. Die Spindel 31 umschließt rückseitig die Abtriebswelle 41b des Rotationsmotors 41 der Förderschnecke 24. Wie insbesondere aus Fig. 12 ersichtlich, ist dieser Rotationsmotor 41 mittels Anlageflansch 41a und Zentrieransatz 41c an einen Verbindungsflansch 43 angeschlossen, der seinerseits an der hülsenförmigen Kolbenstange 34a befestigt ist. Die Abtriebswelle 41b ist mittels Mitnehmer 49 drehfest mit der Spindel 31 verbunden, die ihrerseits über einen Freilauf 42 an der Kolbenstange 34a abgestützt ist, welcher Freilauf nur eine Drehrichtung der Spindel zuläßt. Vorne ist die Spindel über ihren Kupplungsabschnitt 31a mittels einer zentral steuerbaren Kupplungseinrichtung 35 an die Förderschnecke 24 angekuppelt. Diese Förderschnecke 24, die Kupplungseinrichtung 35, die Spindel 31 sowie der Kolben 34 mit Kolbenstange 34a bilden beim Einspritzhub mit dem Rotationsmotor 41 eine Bewegungseinheit. Bei diesem Einspritzhub wird die axiale Bewegung des Kolbens 34 über ein Axialdrucklager 32 auf einen Flansch 31b der Spindel und damit letztlich auf die Förderschnecke 24 übertragen. Auf der Vorderseite dieses Flansches 31b ist ein kombiniertes Axial-Radialdrucklager 33 angeordnet. Die im Bereich ihrer hydraulischen Antriebssysteme von einer Schutzabdeckung 21 umschlossene Spritzgießeinheit ist auf Stützrollen 13 eines Stützlagers 12 abgestützt. Wie insbesondere aus Fig. 2 (links) erkennbar, liegt dabei die Spritzgießeinheit über horizontal eingebördelte, streifenförmigen Ränder der beiden vertikalen Wandungen der im Querschnitt etwa quadratischen Abdeckung 21 auf zwei Stützrollen 13 auf. Demzufolge kann die Spritzgießeinheit auf diesen Stützrollen in Richtung der Spritzachse, z.B. beim Befreiungshub, fahren. Zur Justierung sind die Stützrollen mit Exzenter höhenverstellbar. Der differenziert gestaltete Trägerblock 20 nimmt über eine zentrale obere Ausformung einen Vorratsbehälter 22 für das Kunststoffmaterial auf, aus welchem dieses über einen Rieselkanal in die Einfallöffnung 28 des Plastifizierzylinders 19a gelangen kann.

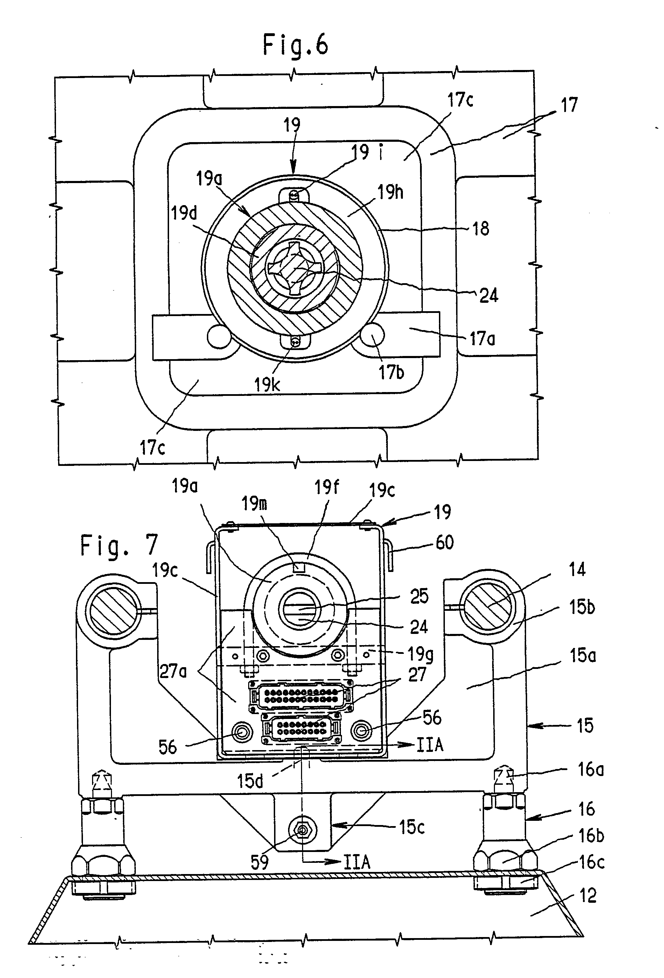

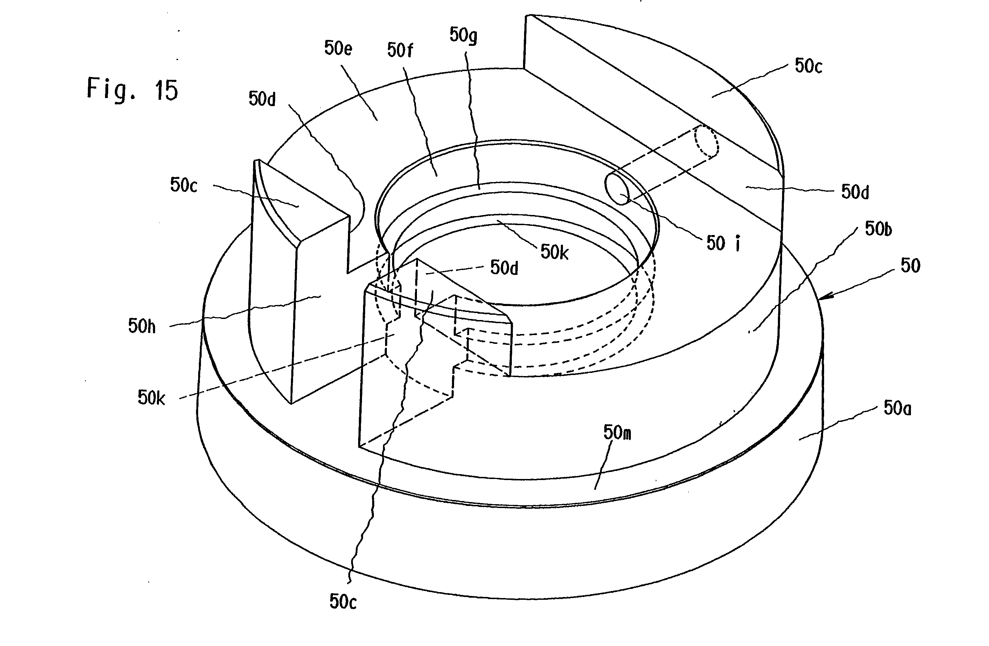

Wie insbesondere aus der Fig. 1 in Verbindung mit Fig. 7 erkennbar, sind die Säulen 14 in Klemm-Muffen 15b eines Lagerbügels 15 über zentrierende Trägerelemente 16 auf dem Stützlager 12 des Maschinenfußes 10 abgestützt. Die Trägerelemente 16 fassen je einen Zentrierzapfen 16a, der in eine entsprechende Bohrung des Lagerbügels 15 eintaucht. Sie sind ferner mittels Verstellmuttern 16b begrenzt höhenverstellbar. Eine Klemm-Mutter 16c dient der Sicherung am Stützlager 12. Der Plastifizierzylinder 19a ist mittels einer Kupplungseinrichtung (Figure 12—14) lösbar an den Trägerblock 20 angeschlossen. Diese Kupplungseinrichtung greift unmittelbar am Plastifizierzylinder 19a an, welcher unter Formschluß in eine zentrale Bohrung des Trägerblockes 20 eintaucht (Fig. 12). Sie umfaßt zwei in diametralen Führungsbahnen geführte Schieber 37''. Die Führungsbahnen sind vorderseitig von Führungsflächen 20b des Trägerblockes 20 und rückseitig von Führungsflächen 50e, 50d (Fig. 15) eines im Grundaufbau rotationssymmetrischen Führungsstückes 50 begrenzt. Dieser ragt mit einem axialen Abschnitt 50b geringeren Durchmessers in eine entsprechende Ausnehmung der Trägerblock 20 formschlüssig hinein und liegt mit kreissegmentförmigen axialen Anlageflächen 50c und mit einer Ringschulter 50m (Fig. 15) am Trägerblock 20 an. Trägerblock 20 und Führungsstück 50 bilden einen Zentrierblock 20, 50, in welchem der Plastifizierzylinder 19a, in Bereichen vor und hinter eine Verriegelungsnut 29 an inneren Mantelflächen dieses Zentrierblockes 20, 50 zentriert ist. Die Schieber 37'' greifen in Verriegelungsposition in die Verriegelungsnut 29 des Plastifizierzylinders 19a ein (Fig. 12—14). Sie liegen dabei an Ringschultern des Plastifizierzylinders 19a an, welche die Verriegelungsnut 29 begrenzen. Diese Ringschultern liegen in senkrecht zum Plastifizierzylinder 19a stehenden Ebenen. Der Kupplungseingriff der Schieber 37'' entspricht daher einer radialen Verriegelung, bei welcher diese Schieber sowohl an den Ringschultern der Verriegelungsnut 29 als auch an der Führungsfläche 50e (Fig. 15) des Führungsstückes 50 anliegen. Der Plastifizierzylinder 19a ist mit Bolzen 62 radial gesichert, der in eine Ausnehmung 19m des Plastifizierzylinders 19a eingreift und im Führungsblock 50 verankert ist, welcher seinerseits über einen Sicherungsstift 20a am Trägerblock 20 drehgesichert ist. Wie insbesondere aus Fig. 12 erkennbar, ist der Zentrieblock 20, 50 über den Zylinder 39 am Trägerblock 40 axial abgestützt. Beide Trägerblöcke 20, 40 sind mittels Befestigungselementen 65 miteinander axial verspannt. Die Schieber 37'' sind mit Hilfe des keilförmigen Teils 51a'' eines Spreizelements 51'' entgegen der Wirkung von Federn 38 aus ihrer Verriegelungsposition verschiebbar (Entriegelungshub), indem dieser keilförmige Teil 51a'' zwischen die Schieber 37'' eingeschoben wird. Dabei ist der Entriegelungshub dadurch axial begrenzt, daß sich die Schultern 51b' des Speizelementes 51'' an Seitenkanten der Schieber 37'' anlegen (Fig. 14). Das Spreizelement 51'' ist von einem Kolben 30 hydraulisch antreibbar, der in einer vertikalen Bohrung des Trägerblockes 20 verschieblich gelagert und über eine Anschlußleitung 63 mit einem hydraulischen Medium beaufschlagbar ist. Die Federn 38 sind in horizontalen Sacklochbohrungen der Schieber 37'' gehaltert und rückseitig an der inneren Mantelfläche der Ausnehmung im Trägerblock 20 abgestützt (Fig. 12—15).

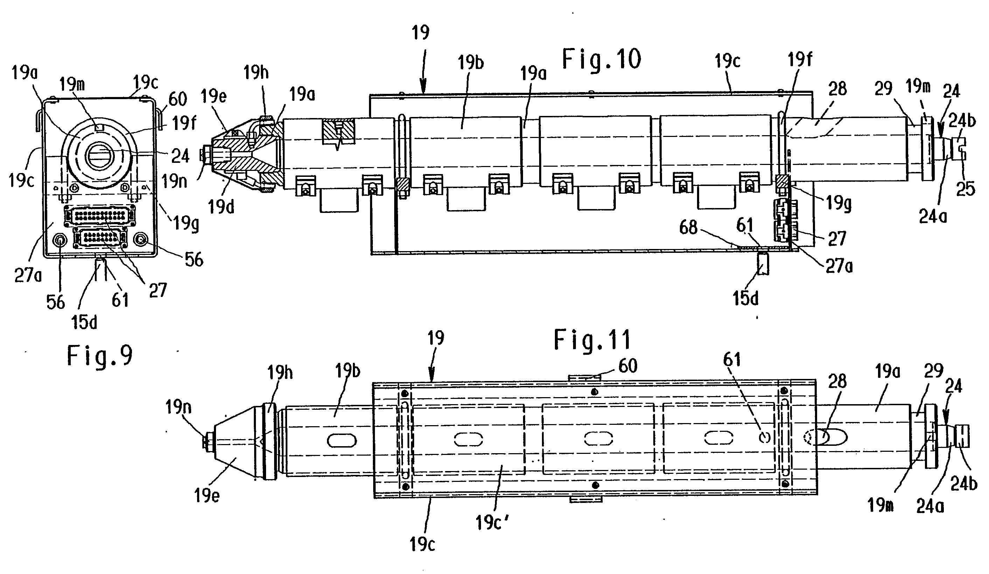

Die Förderschnecke 24 läuft rückseitig in einen mit einer Nut 25 für den Mitnehmerstift 26 versehenen Endabschnitt 24b (Fig. 10, 11) aus. Im Bereich dieses Endabschnittes ist eine Hinergriffsnut 24a angeordnet.

Die die Förderschnecke 24 mit dem Kupplungsabschnitt 31a der Spindel 31 axial verbindende und für eine Übertragung der Drehbewegung der Spindel 31 geeignete Kupplungseinrichtung 35 umfaßt in die Hintergriffsnut 24a in Verriegelungsposition eingreifende Schieber 35g, die ähnlich angeordnet und gesteuert sind wie die Schieber 37'' der Kupplungseinrichtung für den Plastifizierzylinder 19a. Diese mit Federn in Verriegelungsposition gehaltenen Schieber sind dadurch aus ihrer Verriegelungsposition verschiebbar daß ein im Gehäuse der Kupplungseinrichtung 35 vertikal verschiebbar gelagertes Entriegelungsorgan 35d mit einer kegelförmigen Spitze zwischen die Schieber der Kupplungseinrichtung 35 einsteuerbar ist. Dieses Entriegelungsorgan 35d liegt in der Bewegungsbahn des in Richtung der Spritzachse verlängerten Spreizelementes 51''. Daher sind durch einen Entriegelungshub des Spreizelementes 51'' sowohl die Schieber 37'' am Plastifizierzylinder 19a als auch die Schieber 35g (Fig. 12) an der Forderschnecke aus ihrer Verriegelungsposition ausrückbar.

Währen des 'Befreiungshubes' ist der Plastifizierzylinder 19a mit Hilfe einer Arretiervorrichtung axial festgelegt, die an dem stationären Lagerbügel 15 angeordnet ist. Sie umfaßt einen hydraulischen Kolben 15e (Fig. 2a) der mit einem Arretierzapfen 15d in ein Arretierloch 61 der Abdeckung 19c des Plastifizierzylinders 19a entgegen der Wirkung der Feder 15f einrückbar ist. Der Antriebskolben bildet mit einem am horizontalen Steg des Lagerbügels 15 mittig angeformten Teil den hydraulischen Arretierzylinder 15c, der über eine Anschlußleitung 59 mit Druckmedium beaufschlagbar ist. Die hydraulischen Antriebssysteme der Kupplungseinrichtungen an Plastifizierzylinder 19a und Arretierzylinder 15c kommunizieren über die gemeinsame Anschlußleitung 59 miteinander.

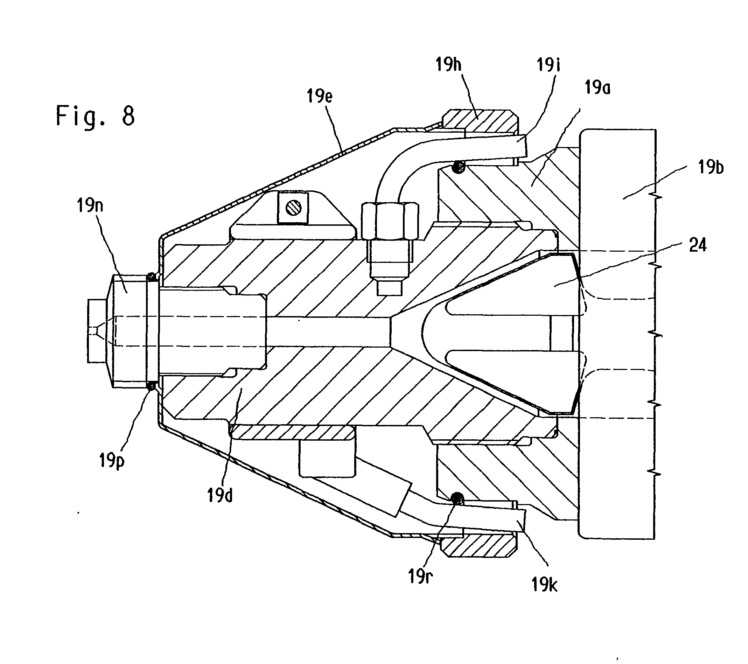

Wie insbesondere aus den Figuren 8—11 erkennbar, umfaßt der Plastifizierzylinder 19a Heizbänder 19b, eine Abdeckung 19c von rechtekigem Querschnitt, einen Düsenkörper 19d und die Düsenspitze 19n. Der Plastifizierzylinder 19a ist mittels Spannbügel 19f auf horizontalen Lagerstücken 19g innerhalb der Abdeckung 19c gehaltert. Die Lagerstücke 19g sind in vertikalen Wandungen dieser Abdeckung abgestützt. Die Abdeckung 19c ist, wie insbesondere aus den Fign. 9—11 ersichtlich, aus, einem U-förmig gebogenen, unteren Blechkörper, einem oberen Deckblech und einer Verstärkungsplatte 68 (Fig. 2A; 10) am Arretierloch 61 zusammengesetzt. Durch den Befreiungshub sind elektrische und hydraulische Kupplungsanschlüsse 27, 56 ausrückbar, deren zylinderseitigen Kupplungsteile an einer vertikalen Trägerplatte 27a innerhalb der Abdeckung 19c und deren korrespondierende Kupplungsteile an dem Trägerblock 20 angeordnet sind.

Nach dem Befreiungshub ist die Plastifiziereinheit 19, 24 rückseitig auf der Stirnkante des vertikal angeordneten Arretierzylinders 15c der Arretiervorrichtung abstützbar. Dabei ist die Abdeckung 19c des Plastifizierzylinders 19a zwischen Zentrierrippen 15a des Lagerbügels 15 festgelegt (Fig. 7). Der Plastifizierzylinder 19a weist im Bereich des Düsenkörpers 19d einen konzentrischen Zentrierring 19h auf. Zwischen der Düsenspitze 19n und dem Zentrierring 19h ist der Düsenkörper 19d von einer Abdeckung 19e konzentrisch umschlossen. Diese Abdeckung 19e übergreift den Düsenkörper 19d stirnseitig und ist an der Düsenspitze 19n mittels Haltering 19p festgelegt. Der Zentrierring 19h sitzt auf einem zylindrischen Endabschnitt des Plastifizierzylinders 19a geringeren Durchmessers und ist dort mittels Haltering 19r axial gesichert. In Ansätzen 17a des Formträgers 17 sind innerhalb an Durchtrittsöffnung 17c Lagerstifte 17b verankert, die Parallel zur Spritzachse verlaufen. Diese Lagerstifte sind zymmetrisch zur vertikalen Symmetrieebene unterhalb der Spritzachse angeordnet. Auf den Lagerstiften 17b ist die Plastifiziereinheit 19, 24 über den Zentrierring 19h axial gleitbar gelagert und zentrierend abgestützt, wie insbesondere aus Fig. 6 erkennbar. Mit 19i und 19k sind eine elektrische Düsenfühlerleitung und ein Anschluß für das Düsenheizband bezeichnet.

In dem Zentrierblock 20, 50 ist der Endabschnitt des gekuppelten Plastifizierzylinders 19a in axialen Bereichen vor und hinter seiner Verriegelungsnut 29 an einer Zentrierfläche 20c des Trägerblockes 20 und einer Zentrierfläche 50f des Zentrierkörpers 50 zentriert, wie insbesondere aus den Fig. 12, 15 erkennbar. Zudem liegt die rückwärtige Stirnkante des Plastifizierzylinders 19a an einer innern Ringschulter 50g (Fig. 15) des Führungsstückes 50 axial an. Ein axialer Schacht 50h im Zentrierkörper 50 dient der Aufnahme und Führung des Spreizelementes 51''. Eine Radialbohrung 50i nimmt den Stift 62 zur Radialsicherung des Plastifizierzylinders 19a, auf, während eine Ringnut 50k eine Drehung des mit der Kupplungseinrichtung 35 rotierenden Entriegelungsorgans 35d ermöglicht. Ein in einer entsprechenden Ausnehmung der Trägerblock 20 angeordneter Kontroll-Schalter 64 mit radial angeordneter Schaltachse liegt mit seinem Schaltorgan an dem in Ausgangsstellung befindlichen Spreizelement 51 an und kontrolliert, ob die Kupplungen an Plastifizierzylinder 19a und Forderschnecke 24 zeitgerecht und bestimmungsgemäß aus- oder eingerückt sind.

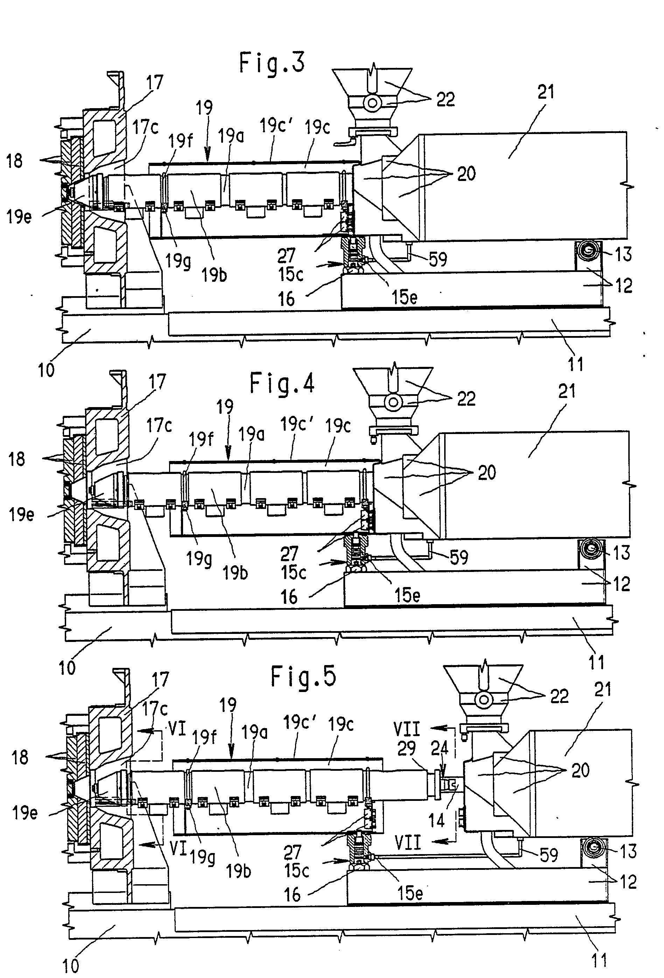

Wird die Spritzgießeinheit mit Hilfe der Fahrzylinder F (Fig. 2, 13, 14) aus einer Position gemäß der Fig. 1 bzw. der Fig. 3 in eine Position gemäß der Fig. 4 gebracht, so ist der 'Befreiungshub' für die Plastifiziereinheit 19, 24 dadurch vorbereitet, daß das Arretierloch 61 (Fig. 9—11) in der Abdeckung 19c in der vertikalen Bewegungsbahn des Arretierzapfens 15d liegt. Danach werden die Kupplungen der Kupplungseinrichtungen im Plastifizierzylinder 19a und an der Forderschnecke 24 ausgerückt. Sodann erfolgt der 'Befreiungshub' für die Plastifiziereinheit, indem die Spritzgießeinheit auf den Stützrollen 13 aus einer Position gemäß Fig. 4 in eine Position gemäß Fig. 5 überführt wird. Dadurch ist die Plastifiziereinheit 19, 24 frei für den Abtransport durch einen Transporter. Hierbei fassen die Greiforgane dieses Transporters die Plastifiziereinheit 19, 24 an Anhängeorganen 60, die hinter dem Schwerpunkt der Plastifiziereinheit 19, 24 liegen. Dadurch gelangt diese Plastifiziereinheit beim Abheben in eine Schräglage, die ein Heraustreten ihres vorderen Endes aus der Durchtrittsöffnung 17c der stationären Aufspannplatte 17 ermöglicht. Der die Spritzgießeinheit von der Spritzgießform absetzende Hub der Fahrzylinder F kann jedoch auch so groß bemessen sein, daß die Plastifiziereinheit 19, 24 ohne Schräglage aus der zugehörigen Kunststoff-Spritzgießmaschine herausgehoben werden kann.

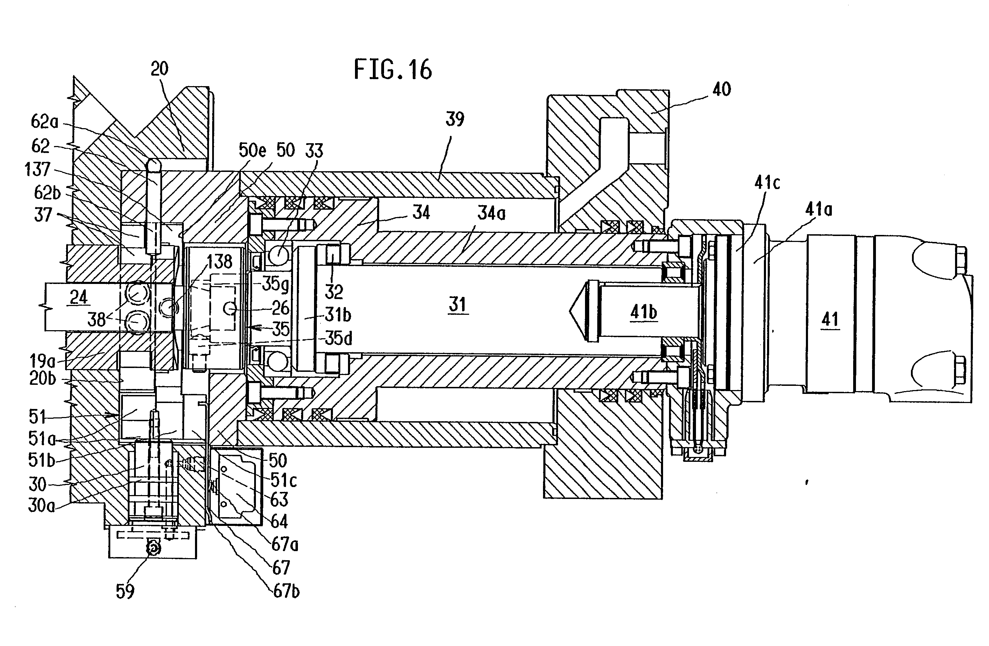

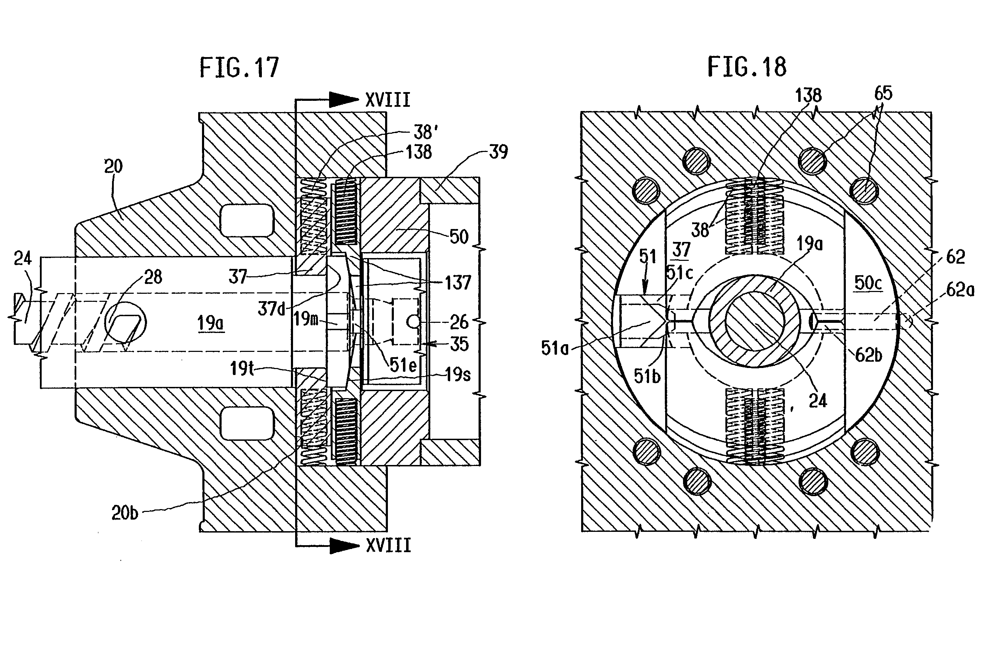

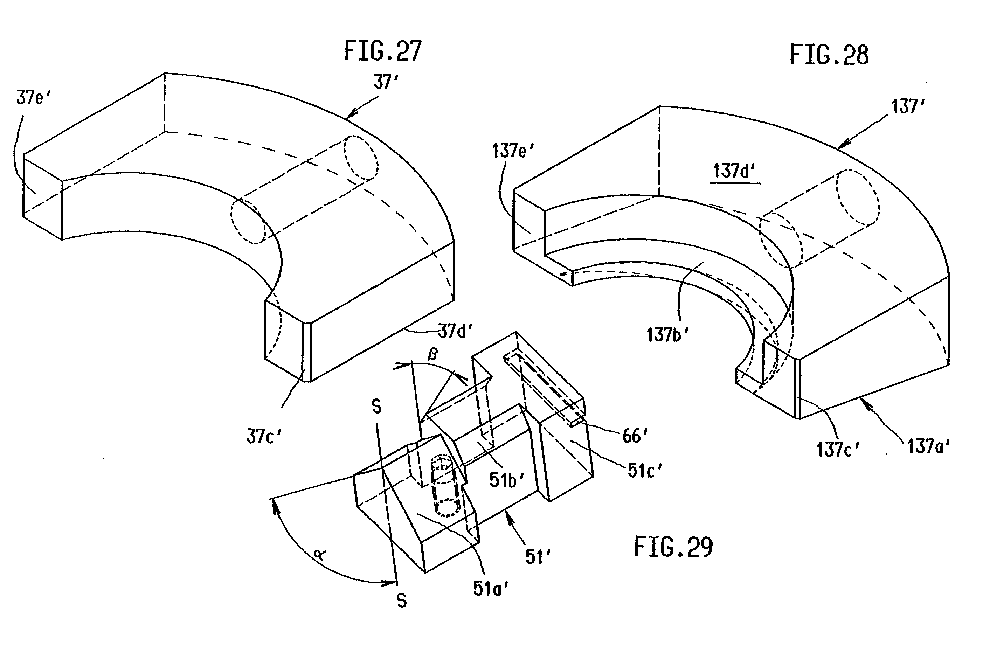

Im folgenden werden die gemeinsamen Merkmale der Ausführungsbeispiele gemäß den Figuren 16 bis 23 und 24 bis 30 beschrieben:

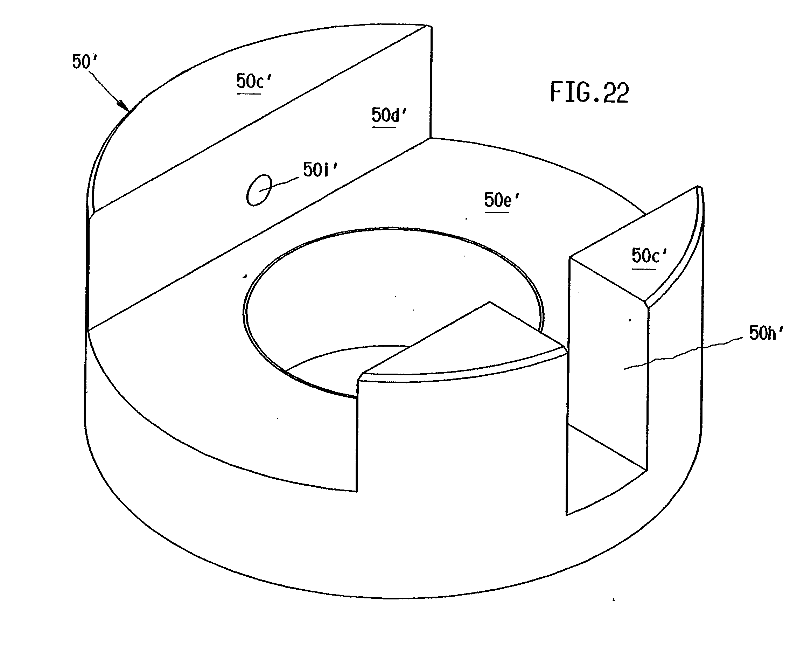

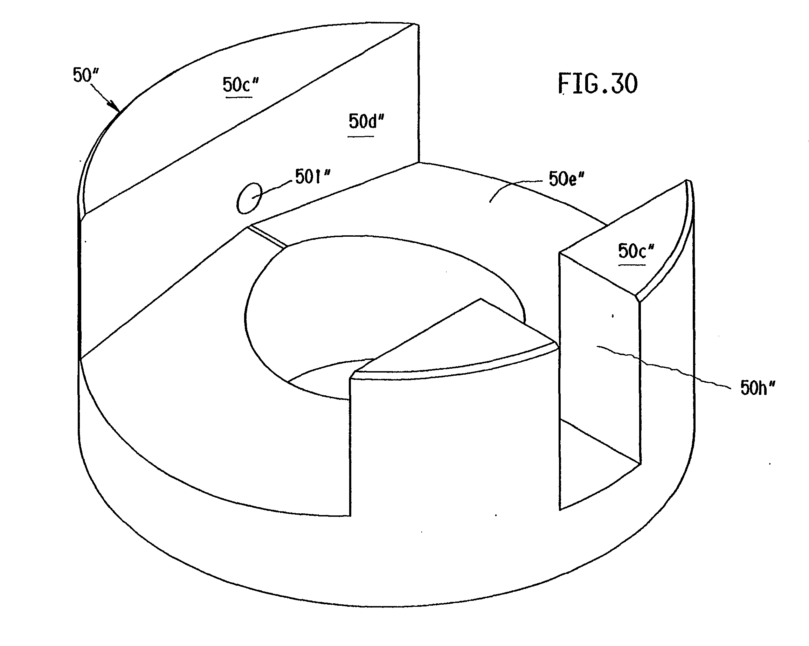

Die Zylinderkupplung umfaßt zwei hydraulisch betätigbare, im wesentlichen radial geführte, keilförmige Arretierschieber 137; 137' mit selbsthemmenden Schrägflächen 137a; 137a'. Diese Schrägflächen bewirken, daß der Plastifizierzylinder 19a; 19a' im Gefolge geringfügiger axialer Bewegungen (Arretierbewegung) axial festlegbar ist. Die Schrägflächen 137a bzw. 137a' sind derart an den Arretierschiebern 137; 137a' angeordnet, daß die Richtung der axialen Arretierbewegung der Richtung einer durch die periodischen axialen Einspritzbelastungen erzeugten axialen Nachrückbewegung des Plastifizierzylinders 19a; 19a' entspricht. Durch die Arretierbewegung wird der Plastifizierzylinder 19a; 19a' auf radiale Riegelflächen 37d; 37d' und Schiebern 37; 37' axial aufpreßbar. Arretierschieber 137; 137' und Schieber 37; 37' sind in diametraler Anordnung zum Plastifizierzylinder 19a; 19a' innerhalb des Zentrierblockes 20, 50'; 20, 50'' radial geführt, der aus dem Trägerstück 20 und dem Führungsstück 50' bzw. 50'' zusammengesetzt ist. Die Arretierschieber 137; 137' greifen unmittelbar am Plastifizierzylinder an. In Arretierposition hintergreifen die Stirnfläche 19s; 19s' des Plastifizierzylinders 19a; 19a'. Die Schieber 37; 37' greifen in die Ringnut 29 des Plastifizierzylinders ein. Dabei ist dieser über eine die Ringnut 29 rückwärtig begrenzende radiale Schulter 19t, 19t' auf die Verriegelungsschieber 37; 37' axial aufgepreßt. Die Arretierschieber 137; 137' sind rückseitig am Führungsstück 50'; 50'' geführt, das in eine zum Plastifizierzylinder 19a; 19a' koaxiale Bohrung des Trägerblockes 20 formschlüssig eintaucht. Arretierschieber 137, 137' und Schieber 37, 37' sind zwischen dem Trägerblock 20 und dem Führungsstück 50'; 50'' in einem gemeinsamen Führungskanal des Zentrierkörpers 20, 50'; 20, 50'' angeordnet. Der Führungskanal ist von diametralen Führungsflächen 50d', 50d''; 50e, 50e' des Führungsstückes 50'; 50'' begrenzt (Fig. 22, 30), das mit Stirnflächen 50c'; 50c'' am Trägerblock anliegt.

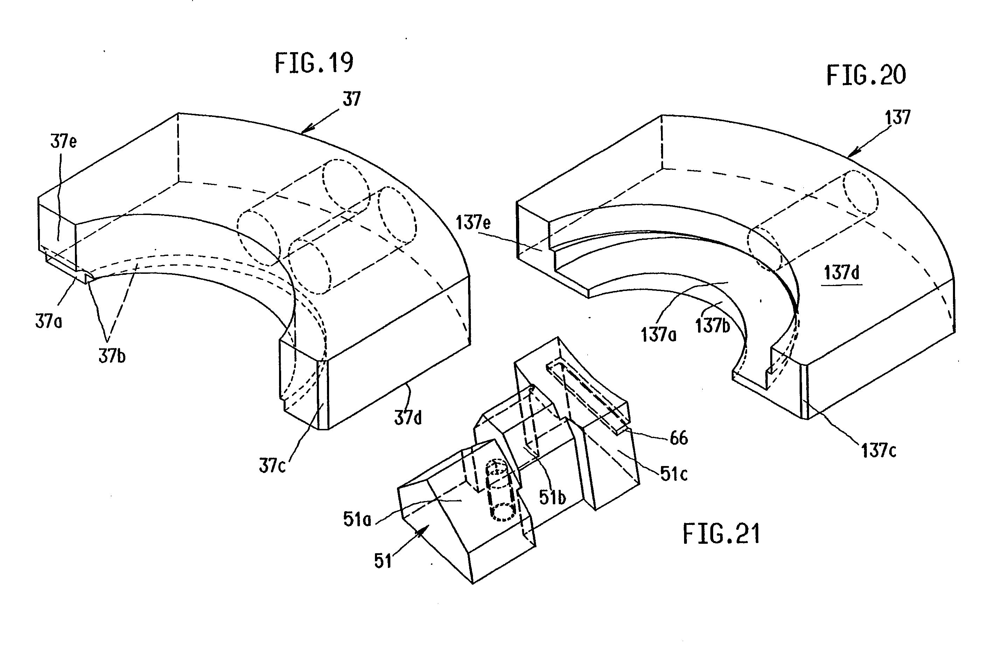

Im Schacht 50h'; 50h'' des Führungsstückes 50'; 50'' ist das Spreizelement 51; 51' radial geführt. Der Plastifizierzylinder 19a; 19a' ist mittels eines das Führungsstück 50; 50' über eine Bohrung 50i'; 50i'' (Fig. 22; 30) durchsetzenden und im Trägerblock 20 drehgesicherten Bolzens 62 gegen Drehung gesichert, wobei das rückwärtige Ende 62a in eine Ausnehmung des Trägerblockes 20 eintaucht. Das freie Ende 62b des Bolzens 62 ragt zwischen die Stirnflächen 137e; 137e' der Arretierschieber 137; 137' hinein (Fig. 16; 18; 26). Dadurch ist sichergestellt, daß die Arretierschieber 137; 137' auch dann in einer zur Zylinderachse symmetrischen Position verbleiben, wenn der Plastifizierzylinder 19a; 19a' aus dem Zylinderblock 20 herausgenommen ist. In diesem Falle liegen die Stirnflächen 137e; 137e' am Endabschnitt 62b des Bolzens 62 an, dessen freies Ende in eine Ausnehmung 19m des Plastifizierzylinders auf Drehsicherung eintaucht. Die rückseitig von Federn 38'; 38'' bzw. 138; 138' belasteten Arretierschieber 137; 137' und Schieber 37; 37' sind mittels des zwischen die genannten Schieber hydraulisch eintreibbaren, keilförmigen Spreizelementes 51; 51' aus Verriegelungsposition ausstoßbar. Das einstückige Spreizelement 51; 51' weist zur radialen Eintreibrichtung schräge Ausstoßer-Schrägflächen 51a; 51a' und 51b; 51b' auf. Das Spreizelement 51; 51' erstreckt sich axial über die Schieber 37; 37', die Arretierschieber 137; 137' und die Kupplungseinrichtung 35 für die Förderschnecke 24. Im axialen Abschnitt der Schieber 37; 37' weist das Spreizelement 51; 51' Ausstoßer-Schrägflächen 51a; 51a' auf, die zu seiner Symmetrieebene s-s einen Winkel α einschließen, der größer ist als der entsprechende Winkel β der Ausstoßer-Schrägflächen 51b; 51b' im axialen Abschnitt der Arretierschieber 137; 137', welcher Winkel β mit ca 40° relativ klein ist. Dadurch kann auch eine relativ starke Verkeilung der Arretierschieber 137; 137' mit einer verhältnismäßig geringen hydraulischen Kraft gelöst werden. Die Ausstoßer-Schrägflächen 51b; 51b' im Abschnitt der Arretierschieber 137; 137' sind in Ausstoßrichtung derart vor den Ausstoßer-Schrägflächen 51a; 51a' im Abschnitt der Verriegelungsschieber 37; 37' angeordnet, daß die axiale Arretierung des Plastifizierzylinders gelöst ist, bevor die Ausstoßer-Schrägflächen 51a; 51a' auf die Schieber 37; 37' auftreffen. Dadurch ist sichergestellt, daß jeweils erst die Arretierschieber 137; 137' und dann erst die aus der Verkeilung befreiten Verriegelungsschieber 37; 37' ausgestoßen werden. Die Ausstoßer-Schrägflächen 51b; 51b' und 51a; 51a' korrespondieren mit Schrägschultern 137c; 137c' und 37c; 37c' der Arretierschieber 137; 137' und der Schieber 37; 37'. Ein breiter, etwa quaderförmiger Abschnitt 51c bzw. 51c' des Spreizelementes entriegelt beim Ausstoßerhub über einen Entriegelungskeil 35d die die Förderschnecke 24 hintergreifenden Verriegelungsschieber 35g der Kupplungseinrichtung 35 an der Förderschnecke 24. Die Arbeitsfläche des Abschnittes 51c ist relativ breit und kann konkav ausgebildet sein (Fig. 21). Dadurch wird der mit der Forderschnecke 24 rotierende Ausstoßerkeil 35d auch dann beaufschlagt, wenn er radial nicht exakt zur Symmetrieebene s-s des Spreizelementes 51, 51' hin orientiert ist. Ein das Spreizelemente antreibender Kolben 30 ist in einer radialen Bohrung des Trägerblockes 20 geführt. Der Hub dieses Kolbens ist durch Anlage eines Radialflansches 30a an einer Ringschulter des Trägerblockes 20 begrenzt. Das Spreizelement 51; 51' steht über ein Betätigungselement 67 mit einem Kontrollschalter 64 in Wirkverbindung, der außen am Trägerblock 20; 20 befestigt ist. Das durch einen Blechstreifen gebildete Betätigungselement 67 ist mit einem abgebördelten Ende in einer Nut 66; 66' des Spreizelementes 51; 51' verankert und betätigt den Kontrollschalter 64 über gesonderte Betätigungszungen 67a; 67b, die auf gesonderte Schaltorgane des Kontrollschalters 64 einwirken, die in einer horizontalen Ebene angeordnet sind (hinere Schaltorgane sind in Fig. 16 verdeckt). Der hydraulische Kolben 30 ist über hydraulische Anschlußleitungen 59; 63 mit Druckmittel versorgt. Nach Ausstoßung sowohl der Arretierschieber 137; 137' als auch der Schieber 37; 37' ist der Trägerblock 20; 20 durch einen entsprechenden Rückwärtshub der Fahrzylinder F vom axial arretierten Plastifizierzylinder 19a, 19a' axial abziehbar, so daß der Plastifizierzylinder 19a; 19a' für einen Abtransport beim Auswechseln frei ist.

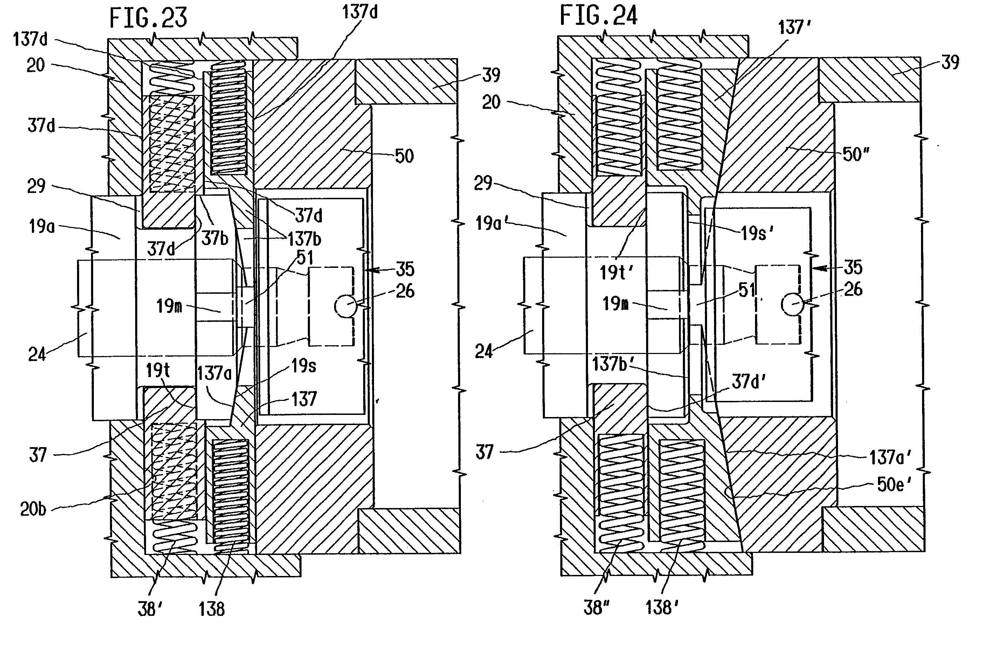

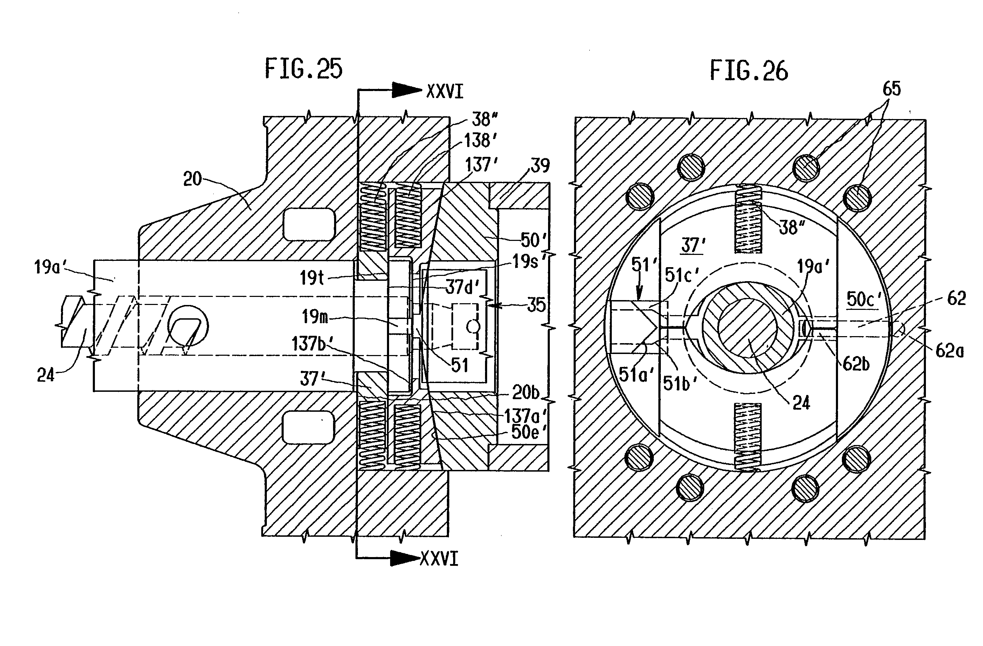

Das Ausführungsbeispiel gemäß den Figuren 16—23 unterscheidet sich von der Variante der Fign. 24—30 im wesentlichen wie folgt: Im Beispiel der Fign. 16—23 sind die Schrägflächen 137a (Fig. 20, 23) an einer halbkreisförmigen Hintergriffsschulter 137b der mit parallelen Führungsflächen 137d versehenen Arretierschieber 137 angeordnet. Die Schrägflächen 137a liegen in Arretierposition an korrespondierenden Schrägfläche 19s des Stirnseite des Plastifizierzylinders 19a an. Die Schieber 37 sind je mit einer in Verriegelungsposition am Umfang des Plastifizierzylinders 19a anliegenden Zentrierschulter 37b (Fig. 19, 23) versehen. Im Beispiel der Fign, 24—30 sind die Rückseiten der Arretierschieber 137' als Schrägflächen ausgebildet, die an Schrägflächen 50e' des Führungsstückes 50' anliegen, Ausgehend von Fig. 1 werden nun an den Fig. 16—30 unter Bezugnahme auf die Fign. 1—7, 9—11 die für einen Wechsel der Plastifiziereinheit erforderlichen Schritte dargelegt: Die Spritzießeinheit wird von der Spritzgießform 18 durch einen hydraulischen Hub der Fahrzylinder F abgesetzt. Danach werden die Arretierschieber 137; 137' und die Verriegelungsschieber 35g der Kupplungseinrichtung 35 für die Forderschnecke (Fig. 16) und zeitlich etwas nachfolgend die Schieber 37''; 37, 37' durch einen radialen Hub des Ausstoßerelementes 51; 51' aus Arretierposition bzw. Verriegelungsposition ausgestoßen. Gleichzeitig wird der Platifizierzylinder 19a; 19a' axial arretiert, indem ein Arretierzapfen 15d (Fig. 7, 9, 10) in ein Arretierloch 61 (Fig. 10, 11) der unteren horizontalen Wandung der Abdeckung 19c hydraulische eingesteuert wird. Sodann wird der arretierte Plastifizierzylinder 19a; 19a' durch einen weiteren, vorzugsweise durch die Fahrzylinder F bewirkten Rückwärtshub (Befreiungshub) der Spritzgießeinheit aus dem Trägerblock 20 befreit. Wie insbesondere aus den Figuren 9, 10 ersichtlich, sind elektrische Kupplungsanschlüsse 27 und hydraulische Kupplungsanschlüsse 56 auf einer vertikalen Trägerplatte 27a innerhalb der Abdeckung 19c angeordnet. Diese Kupplungsanschlüsse korrespondieren mit entsprechenden Kupplungsanschlüssen (in der Zeichnung nicht sichtbar) am Trägerblock 20 bzw. 20. Eine solche Anordnung hat zwangsläufig zur Folge, daß die elektrischen und hydraulischen Versorgungsleitungen für den Plastifizierzylinder im Zuge des horizontalen Befreiungshubes an den Kupplungsanschlüssen 27, 56 getrennt werden. Nach dem Befreiungshub liegt die Plastifiziereinheit mit einer unteren horizontalen Stellfläche der Abdeckung 19c rückseitig auf einem horizontalen Steg des Lagerbügels 15 und vorne auf Stützelementen 17b (Fig. 1; 6) des stationären Formträgers 17 auf. Die freigesetzte Plastifiziereinheit kann nunmehr mit Hilfe eines an den Anhängeorganen 60 (Fig. 11) angreifenden Hebezeuges nach oben abgehoben und in das Depot abtransportiert werden.

Die aus dem Depot kommende, in die Spritzgießeinheit einzusetzende Plastifiziereinheit wird vom Hebezeug auf den horizontalen Steg des Lagerbügels 15 und die Lagerstifte 17b des Formträgers 17 abgestellt. Danach wird die (restliche) Spritzgießeinheit mit dem Zentrierblock 20, 50; 20, 50'; 20, 50'' durch einen dem Befreiungshub entgegengesetzten Hub (Fanghub) der Fahrzylinder F in eine Position gemäß den Figuren 16—18; 23; 24—26 gebracht, in welcher der Plastifizierzylinder in den Trägerblock formschlüssig eintaucht und die Förderschnecke 24 über den Mitnehmerstift 26 mit der Spindel 31 gekuppelt ist. Beim Fanghub befinden sich die Schieber 37''; 37; 37', die Arretierschieber 137; 137' und die Verriegelungsschieber 35g der Kupplungseinrichtung 35 für die Forderschnecke in ausgestoßener Position, in welcher sie durch das Spriezelement 51; 51' gehalten sind.

Durch einen Rückhub des Kolbens 30 gelangt das Spriezelement 51; 51' in Ausgangsstellung. Dadurch werden sämtliche vorgenannten, rückseitig von Federn belasteten Schieber durch Federkraft in Hintergriffsstellung überführt, wobei die Schrägflächen 137a; 137a' der Arretierschieber 137; 137' ein geringfügige axiale Arretierbewegung bewirken.

Beim ersten Einspritzhub des ersten Spritzzyklus des nunmehr beginnenden Spritzbetriebes gerät der Plastifizierzylinder 19a bzw. 19a' unter Einspritzbelastung. Obwohl der letztere bereits beim Aufsetzen der Spritzgießeinheit an der Spritzgießform 18 anliegt, hat die Einspritzbelastung eine geringfügige axiale Nachrückbewegung des Plastifizierzylinders zur Folge. Diese axiale Nachrückbewegung ermöglicht eine entsprechende radial gerichtete Nachrückbewegung der federbelasteten Arretierschieber 137; 137' und eine starke axiale Verkeilung des an den Verriegelungsschiebern 37; 37' wiedergelagerten Plastifizierzylinders. Im Verlauf der weiteren zyklischen Einspritzungen kann sich diese axiale Verkeilung noch verstärken. Im Falle des Ausführungsbeispiels der Figuren 16—23 ergibt sich durch die axial keilende Anlage der Schrägflächen 137a der Arretierschieber 137 an den korrespondierenden Schrägflächen 19s der Stirnseite des Plastifizierzylinders 19a eine zusätzliche zentrierende Wirkung, die durch eine Auflage der Ringschultern 37b der Verriegelungsschieber 37 am Umfang des Plastifizierzylinders noch verstärkt wird.

**Patentansprüche**

1. Kunststoff-Spritzgießeinheit mit wenigstens einem hydraulischen Fahrzylinder (52, 53) zum Auf- und Absetzen auf eine in einer Formschließeinheit aufgenommene Spritzgießform (18), mit einem hydraulischen Einspritzzylinder (34, 39) für den Einspritzhub der im Plastifizierzylinder (19a) der Spritzgießeinheit axial verschiebbaren und mit einem Rotationsantrieb (41) versehenen Förderschnecke (24), mit einem Trägerblock für den Plastifizierzylinder (19a), welcher Trägerblock (20) auf stationären Säulen axial verschiebbar und mit einer Zufuhreinrichtung für das Kunststoffmaterial sowie einer zentralen Bohrung versehen ist, in welche der Plastifizierzylinder (19a) unter Formschluß hineinragt und dort axial festgelegt ist, und mit einer radial geführte Schieber (37'') umfassenden Kupplungseinrichtung für eine zentral steuerbare Auswechslung des Plastifizierzylinders (19a), dadurch gekennzeichnet, daß zur axialen Festlegung des Plastifizierzylinders (19a) am Trägerblock (20) geführte (Führungsflächen 20b) Schieber (37'') in eine Verriegelungsnut (29) des Plastifizierzylinders ein greifen und mittels eines Steuerzylinders (Kolben 30 in Fig. 12) nach Programm steuerbar sind, wobei wenigstens ein Fahrzylinder (52, 53 in Fig. 13) für einen axialen Hub (Befreiungshub) ausgelegt ist, durch welchen den Plastifizierzylinder (19a) aus dem Trägerblock (20) zur Abstützung an einem Lager (Lagerbügel 15) freisetzbar ist, und daß eine Arretiervorrichtung (Zylinder 15c) zur axialen Arretierung des Plastifizierzylinders (19a) während des Befreiungshubes vorgesehen ist, der außerhalb des Trägerblockes (20) am Plastifizierzylinders (19a) angreift.

2. Kunststoff-Spritzgießeinheit nach Patentanspruch 1, dadurch gekennzeichnet, daß zwei diametral zum Plastifizierzylinder (19a) angeordnete Führungsbahnen (Fig. 12, 13, 14) für die Schieber (37'') vorderseitig von Führungsflächen (20b in Fig. 12) des Trägerblockes (20) und rückseitig von Führungsflächen (50e, 50d in Fig. 15) eines im Grundaufbau rotationssymmetrischen Führungsstückes (50) begrenzt sind, der mit einem axialen Abschnitt (50b) geringeren Durchmessers in eine Ausnehmung des Trägerblockes (20) formschlüssig eintaucht.

3. Kunststoff-Spritzgießeinheit nach Patentanspruch 1 oder 2, dadurch gekennzeichnet, daß die Schieber (37'') in Verriegelungsposition an Ringschultern des Plastifizierzylinders (19a) anliegen, welche die Verriegelungsnut (29) begrenzen und in senkrecht zum Plastifizierzylinder (19a) stehenden Ebenen liegen.

4. Kunststoff-Spritzgießeinheit nach einem der vorhergehenden Patentansprüche, dadurch gekennzeichnet, daß zum hydraulischen Einspritzzylinder (34, 39 in Fig. 12) diametral angeordnete Fahrzylinder (53, 52 in Fig. 13) der ganzen Spritzgießeinheit auf den Säulen (14) befestigte stationäre Kolben (53 in Fig. 13) aufweisen.

5. Kunststoff-Spritzgießeinheit nach Patentanspruche 4, dadurch gekennzeichnet, daß die Spritzgießeinheit beim Befreiungshub auf wenigstens einer Stützrolle (13) eines Stützlagers (12) des Maschinenfußes (10) abrollbar gelagert ist, welcher Befreiungshub mit Hilfe der die ganze Spritzgießeinheit verfahrenden Fahrzylinder (53, 52) durchführbar ist.

6. Kunststoff-Spritzgießeinheit nach einem der vorhergehenden Patentansprüche, dadurch gekennzeichnet, daß der in einem stationären Lagerbügel (15) angeordnete Arretierzylinder (15c) einen Arretierkolben (15e) umfaßt, der mit einem Arretierzapfen (15d) in ein Arretierloch (61) einer Abdeckung (19c) des Plastifizierzylinders (19a) einrückbar ist.

7. Kunststoff-Spritzgießeinheit nach einem der vorhergehenden Patentansprüche, dadurch gekennzeichnet, daß die Zylinderräume von Arretierzylinder (15c) und Steuerzylinder (Kolben 30) über eine Anschlußleitung (59) miteinander in offener Verbindung stehen.

8. Kunststoff-Spritzgießeinheit nach einem der vorhergehenden Patentansprüche, dadurch gekennzeichnet, daß der Plastifizierzylinder (19a) nach dem Befreiungshung auf der Stirnkante des vertikalen Arretierzylinders (15c) abstützbar ist.

9. Kunststoff-Spritzgießeinheit nach einem der vorhergehenden Patentansprüche 2—8, dadurch gekennzeichnet, daß der Trägerblock (20) und das Führungsstück (50) einen Zentrierblock (20, 50) bilden, in welchem der Plastifizierzylinder (19a) in axialen Abschnitten vor und hinter der Verriegelungsnut (29) an korrespondierenden, inneren Mantelflächen dieses Zentrierblockes (20, 50) zentriert ist

10. Kunststoff-Spritzgießeinheit nach einem der vorhergehenden Ansprüche, dadurch gekennzeichnet, daß der im Trägerblock (20) verschieblich aufgenommene Plastifizierzylinder (19a) von radial geführten Arretierschiebern (137; 137') mittels Schrägflächen (137a; 137a') axial arretierbar ist (Beispiele der Fign. 16—30).

11. Kunststoff-Spritzgießeinheit nach Patentanspruch 10, dadurch gekennzeichnet, daß die Schrägflächen (137a bzw. 137a') derart an den am Führungstück (50'; 50'') axial abgestützten Arretierschiebern (137; 137') angeordnet sind, daß die Richtung der Arretierbewegung der Richtung einer durch die axiale Einspritzbelastung erzeugten axialen Nachrückbewegung des Plastifizierzylinders (19a; 19a') entspricht.

12. Kunststoff-Spritzgießeinheit nach Patentanspruch 10 oder 11, dadurch gekennzeichnet, daß die Arretierschieber (137; 137') in Arretierposition die Stirnfläche (19s; 19s') des Plastifizierzylinders (19a; 19a') hintergreifen, der mit der die Ringnut (29) begrenzenden radialen Schulter (19t; 19t') auf Riegelfläche (37d; 37d') der Schieber (37; 37') axial aufgepreßt ist.

13. Kunststoff-Spritzgießeinheit nach einem der Patentansprüche 10—12, dadurch gekennzeichnet, daß die Arretierschieber (137; 137') rückseitig am Führungsstück (50'; 50'') geführt sind, welches in eine zum Plastifizierzylinder (19a; 19a') koaxiale Bohrung des Trägerblockes (20) formschlüssig eintaucht.

14. Kunststoff-Spritzgießeinheit nach einem der Patentansprüche 10—13, dadurch gekennzeichnet, daß der Plastifizierzylinder (19a; 19a') mittels eines das Führungsstück (50', 50') (bei 50i, 50i' in Fig. 22, 30) durchsetzenden und im Trägerblock (20) drehgesicherten Bolzens (62) gegen Drehung gesichert ist, dessen freies Ende (62b) zwischen die Stirnflächen (137e; 137e') der Arretierschieber (137; 137') ragt (Fig. 16 in Verbindung mit Fig. 20, 28).

15. Kunststoff-Spritzgießeinheit nach Patentanspruch 13 oder 14, dadurch gekennzeichnet, daß zwei Arretierschieber (137; 137') und zwei Schieber (37; 37') rückseitig von am Trägerblock (20) abgestützten Federn (38; 38' bzw. 138; 138') belastet und mittels eines zwischen die diametral angeordneten Arretierschieber (137; 137') und Schieber (37; 37') hydraulisch eintreibbaren, keilförmigen Spreizelementes (51; 51') aus Verriegelungsposition bzw. Arretierposition ausstoßbar sind, welches Spreizelement (51; 51') zur radialen Ausstoßrichtung schräge Ausstoßer-Schrägflächen (51a; 51a', 51b; 51b') aufweist.

16. Kunststoff-Spritzgießeinheit nach Patentanspruch 15, dadurch gekennzeichnet, daß das einstückige Spreizelement (51; 51') sich axial über die Schieber (37; 37') und die Arretierschieber (137; 137') und die Kupplungseinrichtung (35) für die Förderschnecke (24) erstreckt und im axialen Abschnitt der Schieber (37; 37') Ausstoßer-Schrägflächen (51a; 51a') aufweist, die zur Symmetrieebene (s-s) einen Winkel ($\alpha$) einschließen, der größer ist als der Winkel ($\beta$), welchen die Ausstoßer-Schrägflächen (51b; 51b') im axialen Abschnitt der Arretierschieber (137; 137') einschließen (Fig. 29).

17. Kunststoff-Spritzgießeinheit nach Patentanspruch 16, dadurch gekennzeichnet, daß die Spreiz-Schrägflächen (51b; 51b') des Ausstoßerelementes (51; 51') derart in Ausstoßrichtung vor den Ausstoßer-Schrägflächen (51a; 51a') angeordnet sind, das die axiale Arretierung des Plastifizierzylinders (19a; 19a') gelöst ist, bevor die Ausstoßer-Schrägflächen (51a; 51a') auf die Schieber (37; 37') auftreffen.

18. Kunststoff-Spritzgießeinheit nach einem der vorhergehenden Patentansprüche 10—17, dadurch gekennzeichnet, daß die Schrägflächen (137a in Fig. 20, 23) an einer halbkreisförmigen Hintergriffsschulter (137b) der mit radialen Führungsflächen (137d) versehenen Arretierschieber (137) angeordnet sind und in Arretierposition an korrespondierenden Schrägflächen (19s) der Stirnseite des Plastifizierzylinders (19a) anliegen (Variante der Fig. 16—23).

19. Kunststoff-Spritzgießeinheit nach Patentanspruch 18, dadurch gekennzeichnet, daß die Verriegelungsschieber (37) je mit einer in Verriegelungsposition am Umfang des Plastifizierzylinders (19a) anliegenden Zentrierschulter (37b in Fig. 19, 23) sowie einer Ausnehmung (37a in Fig. 19) im Bereich der Stirnfläche (37e) versehen sind.

20. Kunststoff-Spritzgießeinheit nach einem der Patentansprüche 10—17, dadurch gekennzeichnet, daß die Rückseiten der Arretierschieber (137') als Schrägflächen (137a') ausgebildet sind, welche mit Schrägflächen (50e') des Führungsstückes (50') korrespondieren (Variante der Fig. 24—30).

21. Kunststoff-Spritzgießeinheit nach einem der vorhergehenden Patentansprüche 15—20, dadurch gekennzeichnet, daß das Ausstosserelement (51; 51') über ein Betätigungselement (67) mit einem außen am Trägerblock (20) befestigten Kontrollschalter (64 in Fig. 16) in Wirkverbindung steht, der in beiden extremen Endstellungen des Ausstoßelementes (51; 51') über gesonderte Schaltorgane betätigbar ist.

**Revendications**

1. Unité de moulage par injection de matière plastique, comprenant au moins un cylindre hydraulique de déplacement (52, 53) pour la poser sur un moule de moulage par injection (18) reçu dans une unité de fermeture du moule et la retirer, comprenant un cylindre hydraulique d'injection (34, 39) pour la course d'injection de la vis sans fin d'alimentation (24) qui peut être déplacée axialement dans le cylindre de ramollissement (19a) de l'unité de moulage par injection et qui est munie d'un entraînement en rotation (41), comprenant un bloc porteur pour le cylindre de ramollissement (19a), ledit bloc porteur (20) pouvant être déplacé axialement sur des colonnes fixes (14) et étant muni d'un dispositif d'amenée de la matière plastique, ainsi que d'un perçage central dans lequel le cylindre de ramollissement (19a) pénètre avec conjugaison des formes en pouvant y être fixé axialement, et comprenant un dispositif d'accouplement qui comporte un coulisseau à guidage radial (37'') et qui est destiné à un changement par commande centrale du cylindre de ramollissement (19a), caractérisée par le fait que, pour fixer axialement le cylindre de ramollissement (19a), des coulisseaux (37'') guidés (surfaces de guidage 20b) sur le bloc porteur (20) pénètrent dans une rainure de verrouillage (29) du cylindre de ramollissement et peuvent être commandés selon un programme au moyen d'un cylindre de commande (piston 30 sur la figure 12), au moins un cylindre de déplacement (52, 53 sur la figure 13) étant conçu pour une course axiale (course de dégagement), grâce à laquelle le cylindre de ramollissement (19a) peut être libéré du bloc porteur (20) pour s'appuyer sur une butée (étrier de butée 15), et par le fait qu'il est prévu un dispositif de blocage (cylindre 15c) qui est destiné à bloquer axialement le cylindre de ramollissement (19a) pendant la course de dégagement et qui vient en prise sur le cylindre de ramollissement (19a) à l'extérieur du bloc porteur (20).

2. Unité de moulage par injection de matière plastique selon la revendication 1, caractérisée par le fait que deux voies de guidage (figures 12, 13, 14) disposées diamétralement par rapport au cylindre de ramollissement (19a) et destinées aux coulisseaux (37'') sont délimitées à l'avant par des surfaces de guidage (20b sur la figure 12) du bloc porteur (20) et à l'arrière par des surfaces de guidage (50e, 50d sur la figure 15) d'une pièce de guidage (50) dont la forme générale présente une symérie de révolution et qui pénètre dans un évidement du bloc porteur (20) par une partie axiale (50b) de diamètre inférieur.

3. Unité de moulage par injection de matière plastique selon la revendication 1 ou 2, caractérisée par le fait que les coulisseaux (37'') reposent en position de verrouillage sur des épaulements annulaires du cylindre de ramollissement (19a) qui délimitent la rainure de verrouillage (29) et qui sont disposés dans des plans situés perpendiculairement au cylindre de ramollissement (19a).

4. Unité de moulage par injection de matière plastique selon l'une des revendications précédentes, caractérisée par le fait que des cylindres de déplacement (53, 52 sur la figure 13) de l'ensemble de l'unité de moulage par injection, disposés diamétralement par rapport au cylindre hydraulique d'injection (34, 39 sur la figure 12), présentent des pistons fixés (53 sur la figure 13) qui sont fixés sur les colonnes (14).

5. Unité de moulage par injection de matière plastique selon la revendication 4, caractérisée par le fait que l'unité de moulage par injection est montée de façon à pouvoir rouler, lors de la course de dégagement, sur au moins un galet d'appui (13) d'un appui (12) du socle (10) de la machine, ladite course de dégagement pouvant être réalisée à l'aide des cylindres de déplacement (53, 52) qui déplacent l'ensemble de l'unité de moulage par injection.

6. Unité de moulage par injection de matière plastique selon l'une des revendications précédentes, caractérisée par le fait que le cylindre de blocage (15c) disposé dans un étrier de butée fixe (15) comporte un piston de blocage (15e) qui peut être enfoncé par un goujon de blocage (15d) dans un trou de blocage (61) d'un recouvrement (19c) du cylindre de ramollissement (19a).

7. Unité de moulage par injection de matière plastique selon l'une des revendications précédentes, caractérisée par le fait que les volumes intérieurs du cylindre de blocage (15c) et du cylindre de commande (piston 30) sont en communication directe entre eux par l'intermédiaire d'une conduite de raccordement (59).

8. Unité de moulage par injection de matière plastique selon l'une des revendications précédentes, caractérisée par le fait que le cylindre de ramollissement (19a) peut s'appuyer après la course de dégagement sur le bord frontal du cylindre de blocage vertical (15c).

9. Unité de moulage par injection de matière plastique selon l'une des revendications précédentes 2 à 8, caractérisée par le fait que le bloc porteur (20) et la pièce de guidage (50) constituent un bloc de centrage (20, 50) dans lequel le cylindre de ramollissement (19a) est centré en des parties axiales situées devant et derrière la rainure de verrouillage (29) sur des surfaces latérales intérieures correspondantes de ce bloc de centrage (20, 50).

10. Unité de moulage par injection de matière plastique selon l'une des revendications précédentes, caractérisée par le fait que le cylindre de ramollissement (19a) reçu de manière coulissante dans le bloc porteur (20) peut être bloqué axialement par des coulisseaux de blocage guidés radialement (137; 137') au moyen de surfaces obliques (137a; 137a') (exemples des figures 16—30).

11. Unité de moulage par injection de matière plastique selon la revendication 10, caractérisée par le fait que les surfaces obliques (137a et 137a', respectivement) sont disposées sur les coulisseaux de blocage (137; 137') en appui axial sur la pièce de guidage (50'; 50'') de telle manière que la direction du déplacement de blocage corresponde à la direction d'un déplacement axial supplémentaire vers l'arrière du cylindre de ramollissement (19a; 19a') qui est engendré par la charge axiale d'injection.

12. Unité de moulage par injection de matière plastique selon la revendication 10 ou 11, caractérisée par le fait que les coulisseaux de blocage (137; 137') viennent en prise par l'arrière dans la position de blocage avec la surface frontale (19s; 19s') du cylindre de ramollissement (19a; 19a') qui est serré axialement sur des surfaces de verrouillage (37d; 37d') des coulisseaux (37; 37') par l'épaulement radial (19t; 19t') qui délimite la rainure annulaire (29).

13. Unité de moulage par injection de matière plastique selon l'une des revendications 10 à 12, caractérisée par le fait que les coulisseaux de blocage (137; 137') sont guidés à l'arrière sur la pièce de guidage (50'; 50'') qui pénètre avec conjugaison des formes dans un perçage du bloc porteur (20) coaxial par rapport au cylindre de ramollissement (19a; 19a').

14. Unité de moulage par injection de matière plastique selon l'une des revendications 10 à 13, caractérisée par le fait que le cylindre de ramollissement (19a; 19a') est empêché de tourner au moyen d'un goujon (62) qui traverse la pièce de guidage (50'; 50'') (en 50i; 50i') sur les figures 22, 30), qui est empêché de tourner dans le bloc porteur (20) et dont l'extrémité libre (62b) fait saillie entre les surfaces frontales (137e; 137e') des coulisseaux de blocage (137; 137') (figure 16 en liaison avec les figures 20, 28).

15. Unité de moulage par injection de matière plastique selon la revendication 13 ou 14, caractérisée par le fait que deux coulisseaux de blocage (137; 137') et deux coulisseaux (37; 37') sont chargés à l'arrière par des ressorts (38; 38' et, respectivement, 138; 138') qui s'appuient sur le bloc porteur (20), et peuvent être poussés hors de la position de verrouillage ou de la position de blocage, respectivement, au moyen d'un élément d'écartement (51; 51') en forme de coin qui peut être enfoncé hydrauliquement entre les coulisseaux de blocage (137; 137') et les coulisseaux (37; 37') disposés diamétralement, ledit élément d'écartement (51; 51') présentant des surfaces obliques de poussée (51a; 51a', 51b; 51b') qui sont inclinées par rapport à la direction radiale de poussée.

16. Unité de moulage par injection de matière plastique selon la revendication 15, caractérisée par le fait que l'élément d'écartement d'un seul tenant (51; 51') s'étend axialement sur les coulisseaux (37; 37') et les coulisseaux de blocage (137; 137') et sur le dispositif d'accouplement (35) destiné à la vis sans fin d'alimentation (24), et qu'il comporte, dans la partie axiale des coulisseaux (37; 37'), des surfaces obliques de poussée (51a; 51a') qui forment par rapport au plan de symétrie (s-s) un angle (α) qui est supérieur à l'angle (β) que forment les surfaces obliques de poussée (51b; 51b') dans la partie axiale des coulisseaux de blocage (137; 137') (figure 29).

17. Unité de moulage par injection de matière plastique selon la revendication 16, caractérisée par le fait que les surfaces obliques d'écartement (51b; 51b') de l'élément de poussée (51; 51') sont disposées avant les surfaces obliques de poussée (51a; 51a') dans la direction de la poussée, de telle sorte que le blocage axial du cylindre de ramollissement (19a; 19a') soit dégagé avant que les surfaces obliques de poussée (51a; 51a') ne rencontrent les coulisseaux (37; 37').

18. Unité de moulage par injection de matière plastique selon l'une des revendications précédentes 10 à 17, caractérisée par le fait que les surfaces obliques (137a sur les figures 20, 23) sont disposées sur un épaulement de prise par l'arrière en forme de demi-cercle (137b) des coulisseaux de blocage (137) munis de surfaces de guidage radiales (137d), et qu'elles reposent en position de blocage sur des surfaces obliques correspondantes (19s) du côté frontale du cylindre de ramollissement (19) (variante des figures 16—23).

19. Unité de de moulage par injection de matière plastique selon la revendication 18, caractérisée par le fait que les coulisseaux de verrouillage (37) sont munis chacun d'un épaulement de centrage (37b sur les figures 19, 23) qui repose en position de verrouillage sur le pourtour du cylindre de ramollissement (19a), ainsi que d'un évidement (37a sur la figure 19) dans la région de la surface frontale (37e).

20. Unité de moulage par injection de matière plastique selon l'une des revendications 10 à 17, caractérisée par le fait que les faces arrière des coulisseaux de blocage (137') sont réalisées sous la forme de surfaces obliques (137a') qui correspondent à des surfaces obliques (50e') de la pièce de guidage (50') (variante des figures 24—30).

21. Unité de moulage par injection de matière plastique selon l'une des revendications précédentes 15 à 20, caractérisée par le fait que l'élément de poussée (51; 51') est en liaison opérationnelle, par l'intermédiaire d'un élément d'actionnement (67), avec un interrupteur de contrôle (64 sur la figure 16) qui est fixé extérieurement sur le bloc porteur (20) et qui peut être actionné par l'intermédiaire d'organes de commutation séparés dans les deux positions finales extrêmes de l'élément de poussée (51; 51').

**Claims**

1. Plastics injection moulding unit, including at least one hydraulic drive cylinder (52, 53) for insertion on and withdrawal from an injection mould assembly (18), which is accommodated in a mould closing unit, a hydraulic injection cylinder (34, 39) for the injection stroke of the feed screw (24), which is axially displaceable in the plasticising cylinder (19a) of the injection moulding unit and is provided with a rotational drive means (41), a carrier block for the plasticizing cylinder (19a), which carrier block (20) is axially displaceable on stationary columns (14) and is provided with a feeding arrangement for supplying the plastics material and with a central bore, into which the plasticizing cylinder (19a) protrudes in a form-fitting manner and is axially secured there, and a coupling device, which comprises radially guided locking bolts (37''), for achieving a centrally controllable changeover of the plasticising cylinder (19a), characterised in that, for the axial securement of the plasticizing cylinder (19a) on the carrier block (20), locking bolts (37'') which are guided (guide faces 20b) engage in a locking groove (29) in the plasticizing cylinder and are programme-controllable by means of a control cylinder (piston 30 in Fig. 12), at least one drive cylinder (52, 53 in Fig. 13) being designed for an axial stroke (releasing stroke), by means of which the plasticizing cylinder (19a) is releasable from the carrier block (20) for support on a support (support yoke 15), and in that a stopping device (cylinder 15c) is provided for the axial stopping of the plasticizing cylinder (19a) during the releasing stroke, which engages with the plasticizing cylinder (19a) externally of the carrier block (20).

2. Plastics injection moulding unit according to claim 1, characterised in that two guide tracks (Figs. 12, 13, 14), which are disposed diametrically relative to the plasticizing cylinder (19a) for guiding the locking bolts (37''), are defined at the front end by guide faces (20b in Fig. 12) of the carrier block (20) and at the rear end by guide faces (50e, 50d in Fig. 15) of a guide body (50), which is rotationally symmetrical in its basic structure and extends in a form-fitting manner into a bore in the carrier block (20) with an axial portion (50b) of small diameter.

3. Plastics injection moulding unit according to claim 1 or 2, characterised in that, in the locking position, the locking bolts (37'') abut against annular shoulders of the plasticizing cylinder (19a), which shoulders define the locking groove (29) and lie in planes extending vertically relative to the plasticizing cylinder (19a).

4. Plastics injection moulding unit according to one of the preceding claims, characterised in that drive cylinders (52, 53 in Fig. 13), which are disposed diametrically relative to the hydraulic injection cylinder (34, 39 in Fig. 12), of the entire injection moulding unit have stationary pistons (52, in Fig. 13) mounted on the columns (14).

5. Plastics injection moulding unit according to claim 4, characterised in that, during the releasing stroke, the injection moulding unit is mounted so as to be rollable on at least one support roller (13) of a support member (12) of the machine stand (10), which releasing stroke is accomplishable by means of the drive cylinders (53, 52), which move the entire injection moulding unit.

6. Plastics injection moulding unit according to one of the preceding claims, characterised in that the stopping cylinder (15c), which is disposed in a stationary support yoke (15), includes a stopping piston (15e), which is engageable with a stopping pin (15d) into a stop hole (61) in a cover (19c) of the plasticizing cylinder (19a).

7. Plastics injection moulding unit according to one of the preceding claims, characterised in that the cylinder chambers of stopping cylinder (15c) and control cylinder (piston 30) communicate openly with one another via a conduit (59).

8. Plastics injection moulding unit according to one of the preceding claims, characterised in that the plasticizing cylinder (19a) is supportable on the front edge of the vertical stopping cylinder (15c) after the releasing stroke.

9. Plastics injection moulding unit according to one of the preceding claims 2—8, characterised in that the carrier block (20) and the guide body (50) form a centering block (20, 50), in which the plasticizing cylinder (19a) is centered in axial portions in front of and behind the locking groove (29) on corresponding, inner surfaces of this centering block (20, 50).

10. Plastics injection moulding unit according to one of the preceding claims, characterised in that the plasticizing cylinder (19a), which is displaceably accommodated in the carrier block (20), is axially clampable by radially guided clamping bolts (137; 137') by means of oblique faces (137a; 137a') (Examples of Figs. 16—30).

11. Plastics injection moulding unit according to claim 10, characterised in that the oblique faces (137a and 137a' respectively) are disposed on the clamping bolts (137; 137'), which are axially supported on the guide body (50'; 50''), in such a manner that the direction of the clamping movement corresponds to the direction of an axial

follow-up movement of the plasticizing cylinder (19a; 19a') produced by the axial injection loading.

12. Plastics injection moulding unit according to claim 10 or 11, characterised in that, in the clamping position, the clamping bolts (137; 137') engage behind the end faces (19s; 19s') of the plasticizing cylinder (19a; 19a'), which is pressed axially onto locking faces (37d; 37d') of the locking bolts (37; 37') with the radial shoulder (19t; 19t') defining the annular groove (29).

13. Plastics injection moulding unit according to one of claims 10—12, characterised in that the clamping bolts (137; 137') are guided on the rear of the guide body (50'; 50''), which protrudes in a form-fitting manner into a bore in the carrier block (20), which bore extends coaxially with the plasticizing cylinder (19a; 19a').

14. Plastics injection moulding unit according to one of claims 10—13, characterised in that the plasticizing cylinder (19a; 19a') is prevented from rotating by means of a pin (62), which extends through the guide body (50', 50'') (at 50i; 50i' in Figs. 22, 30) and is prevented from rotating in the carrier block (20), the free end (62b) of said pin protruding between the end faces (137e; 137e') of the clamping bolts (137; 137') (Fig. 16 in conjunction with Figs. 20, 28).

15. Plastics injection moulding unit according to claim 13 or 14, characterised in that two clamping bolts (137; 137') and two locking bolts (37; 37') are loaded at the rear end by springs (38; 38' and 138; 138' respectively), which are supported on the carrier block (20), and they are ejectable from their respective locking and clamping positions, by means of a wedge-shaped expander element (51; 51'), which is hydraulically insertable between the diametrically disposed clamping bolts (137; 137') and locking bolts (37; 37'), which expander element (51; 51') has oblique ejector faces (51a; 51a', 51b; 51b') which are inclined relative to the radial direction of ejection.

16. Plastics injection moulding unit according to claim 15, characterised in that the one-piece expander element (51; 51') extends axially over the locking bolts (37; 37') and the clamping bolts (137; 137') and the coupling device (35) for the feed screw (24) and has oblique ejector faces

(51a; 51a') in the axial portion of the locking bolts (37; 37'), which faces subtend an angle (α) relative to the symmetry plane (s-s) which is greater than the angle (β) subtended by the oblique ejector faces (51b; 51b') in the axial portion of the clamping bolts (137; 137') (Fig. 29).

17. Plastics injection moulding unit according to claim 16, characterised in that the oblique expander faces (51b; 51b') of the ejector element (51; 51') are disposed in front of the oblique ejector faces (51a; 51a'), when viewed with respect to the direction of ejection, in such a manner that the axial clamping of the plasticizing cylinder (19a; 19a') is released before the oblique ejector faces (51a; 51a') encounter the locking bolts (37; 37').

18. Plastics injection moulding unit according to one of the preceding claims 10—17, characterised in that the oblique faces (137a in Figs. 20, 23) are disposed on a semi-circular rearwardly engaging shoulder (137b) of the clamping bolts (137), which are provided with radial guide faces (137d) and, in the clamping position, they abut against corresponding oblique faces (19s) of the front end of the plasticizing cylinder (19a) (variant of Figs. 16—23).

19. Plastics injection moulding unit according to claim 18, characterised in that the locking bolts (37) are each provided with a centering shoulder (37b in Figs. 19, 23), which abuts against the periphery of the plasticizing cylinder (19a) in the locking position, and with a bore (37a in Fig. 19) in the region of the front end (37e).

20. Plastics injection moulding unit according to one of claims 10—17, characterised in that the rear ends of the clamping bolts (137') are oblique faces (137a'), which correspond to oblique faces (50e') of the guide body (50') (variante of Figs. 24—30).

21. Plastics injection moulding unit according to one of the preceding claims 15—20, characterised in that the ejector element (51; 51') is in operative connection with a control switch (64 in Fig. 16), which is mounted externally on the carrier block (20), via an actuating element (67), and said control switch is actuatable in both extreme end positions of the ejector element (51; 51') via separate switching means.

FIG. 1

FIG. 2

FIG. 2A

Fig.3

Fig.4

Fig.5

## Fig.6

## Fig. 7

Fig. 8

Fig.10

Fig.11

Fig.9

Fig.12

Fig.13

Fig.14

Fig. 15

FIG.16

FIG.17

20

24

28

37

37d

19m

19a

19t

20b

XVIII

38'
138

39

50

137

26

35

51e

19s

XVIII

FIG.18

138    65

38

19a

51    37
51c

51a

51b

24

50c

62

62a

62b

EP 0 198 364 B1

FIG.19

37

37e

37a

37b

37e

37d

37c

FIG.20

137

137e

137d

137a  137b

137c

66

51c

51b

51a

51

FIG.21

EP 0 198 364 B1

FIG.22

FIG.23

FIG.24

EP 0 198 364 B1

FIG.25

XXVI

38"
138'
137'
39

20

50'
19s'
19a'
37d'
19t
35
19m
51
137b'
37'
20b
24
137a'
50e'

XXVI

FIG.26

65

37'
38"
51'
51c'
19a'
50c'
62
51a'
51b'
62b
62a
24

EP 0 198 364 B1

14

FIG.27

FIG.28

37e'

37'

137e'

137'

137d'

37d'

137b'

37c'

137c'    137a'

β

S

66'

51c'

51b'

α

51'

S

51a'

FIG.29

EP 0 198 364 B1

FIG.30

50″
50c″
50d″
50l″
50e″
50c″
50h″

EP 0 198 364 B1